# EUROPEAN PATENT SPECIFICATION

(11) **EP 1 502 846 B1**
(45) Date of publication and mention of the grant of the patent: **09.12.2009**
(21) Application number: 04016574.8
(22) Date of filing: 14.07.2004
(51) Int. Cl.: B62M 3/00, B62K 19/16

(54) **Bicycle crank arm**
Fahrradkurbelarm
Bras de manivelle de bicyclette

(30) Priority: 29.07.2003 JP 2003281582
(43) Date of publication of application: 02.02.2005
(73) Proprietor: SHIMANO INC., Osaka 590-8577 (JP)
(72) Inventor: Nonoshita, Tetsu, Osaka (JP)
(74) Representative: Grosse - Schumacher - Knauer - von Hirschhausen

(56) References cited:
- EP-A- 1 270 393
- WO-A-03/000543
- WO-A-03/024185
- PATENT ABSTRACTS OF JAPAN vol. 2003, no. 07, 3 July 2003 (2003-07-03) & JP 2003 072666 A (CAMPAGNOLO SPA), 12 March 2003 (2003-03-12)
- PATENT ABSTRACTS OF JAPAN vol. 2003, no. 06, 3 June 2003 (2003-06-03) & JP 2003 054478 A (CAMPAGNOLO SPA), 26 February 2003 (2003-02-26) & EP 1 281 609 A (CAMPAGNOLO S.R.L) 5 February 2003 (2003-02-05)

## Description

### BACKGROUND OF THE INVENTION

### Field of the Invention

The present invention generally relates to a bicycle crank arm. In particular, the present invention relates to a bicycle crank arm having a first end part adapted to be coupled to a bicycle crank shaft and a second end part adapted to be coupled to a pedal, the crank arm being designed to make it possible to notice wear of the bicycle crank arm easily. Background Information

A bicycle is provided with a frame that constitutes the main body (framework) of the bicycle and crank shaft that is mounted in a freely rotatable manner to a bottom end portion of the frame. One end of each crank arm is mounted to each end of the crank shaft to rotate therewith. The other ends of the crank arms have pedals mounted thereto.

Crank arms comprising a core material and an outer material formed on the outside of the core material have already been proposed (see Japanese Laid-Open Patent Publication No. 2003-72666 and Japanese Laid-Open Patent Publication No. 2003-54478). With these types of crank arms, such effects as reduced weight and lowered cost can potentially be achieved by making the outside layer out of resin or other non-metal material. However, these crank arms suffer from some drawbacks.

When the rider is pedaling, the inside face portions of the rider's shoes generally contact the crank arms. This can cause the surfaces of the crank arms that are contacted by the inside face portions of the rider's shoes to become worn with use (e.g., after extended and/or prolonged use). This holds true for the conventional type of crank arms described above. However, since the crank arms are located on a lower portion of the bicycle, the rider does not easily notice the wear due to the crank arms being normally out of the rider's line of sight. Alternatively, even if the rider notices the wear on the crank arms, the rider can not know the extent of the wear on the crank arms. In the case of the conventional crank arms just described, there is the possibility that the strength of the crank arm will decline and a future breakage failure will occur if very advanced wear is ignored.

EP 1 270 393 A shows a bicycle crank arm. The crank arm includes a core material and an outer material covering the core material. The outer material has a first layer formed to cover the core material, and a second layer formed such that it covers the first layer.

If the outer material is carbon fiber, it is even less likely that the rider will notice the wear at an early stage because the carbon fiber has a blackish color.

In view of the above, it will be apparent to those skilled in the art from this disclosure that there exists a need for an improved bicycle crank arm. This invention addresses this need in the art as well as other needs, which will become apparent to those skilled in the art from this disclosure.

### SUMMARY OF THE INVENTION

One object of the present invention is to make it possible to notice the wear of a bicycle crank arm easily.

In accordance with a first aspect of the present invention, a bicycle crank arm is provided that includes a first end portion, a second end portion and a center portion extending between the first and second end portions. The first end portion is configured to be coupled to a bicycle crank shaft. The second end portion is configured to have a pedal rotatably coupled thereto. The bicycle crank arm includes a core material arranged in an area between the first and second end portions, and an outer material covering the core material. The outer material has a first layer formed such that it covers the core material, a second layer formed such that it covers the first layer, and a marking layer arranged between the first and second layers.

A bicycle crank shaft is mounted to the first end portion (part), while a pedal is mounted to the second end portion (part). The core material is arranged such that it extends between the first and second end parts. The marking layer can be arranged in a middle area, along the entire outside of the crank arm or completely around the outside (exterior) of the first layer of the crank arm.

With this bicycle crank arm, the marking layer becomes exposed as the second layer of the outer material is worn due to repeated contact with the side face portion of the rider's shoe. As a result, the rider or other observer can easily notice the wear by seeing the marking layer. Thus, the marking layer can also be considered an indicating layer.

In accordance with a second aspect of the present invention, the marking layer of the bicycle crank arm is arranged on the side opposite to where the crank shaft is mounted, i.e., the lateral outside where the pedal is mounted.

Accordingly, with this bicycle crank arm, this marking layer is arranged on the pedal side, i.e., the side where the rider's shoes contact the crank arm. As a result, wear caused by contact with the rider's shoes can be detected reliably and easily.

In accordance with a third aspect of the present invention, the marking layer of the bicycle crank arm is arranged at least in a lengthwise-middle area or portion between the first end and the second end of the bicycle crank arm.

With this bicycle crank arm, the wear can be noticed even more reliably because the marking layer is arranged in a portion that is frequently contacted by the rider's shoes. Also, material costs can be reduced by limiting the marking layer.

In accordance with a fourth aspect of the present invention, the marking layer of the bicycle crank arm has a different color hue than the second layer.

This bicycle crank arm enables the wear to be noticed even more reliably.

In accordance with a fifth aspect of the present invention, the first and second layers of the bicycle crank arm are constructed of a carbon material.

This bicycle crank arm achieves lighter weights by using the aforementioned materials, but is more easily worn than metal crank arms. However, the wear of this crank arm can be noticed reliably because of the marking layer.

In accordance with a sixth aspect of the present invention, the core material of the bicycle crank arm is constructed of a foaming resin.

This bicycle crank arm achieves lighter weights by using the aforementioned materials, but is more easily worn than metal crank arms. However, the wear of this crank arm can be noticed reliably because of the marking layer.

In accordance with a seventh aspect of the present invention, the second layer of the bicycle crank arm is a single layer of carbon cloth.

This bicycle crank arm uses carbon cloth for the outermost layer for design purposes, but the carbon cloth wears quickly because it is not a material having superior strength when contacted in this manner. However, the wear of this crank arm can be noticed reliably because it has marking layers.

In accordance with an eighth aspect of the present invention, the bicycle crank arm includes two mounting members.

The two mounting members are arranged on the first and second ends, respectively. The crank shaft and the pedal are mounted to the first and second mounting members, respectively. The first and second layers are also formed on the outside of the mounting members.

With this bicycle crank arm, it is possible to, for example, to make the mounting portions alone out of metal because they require high rigidity and make the separate core material of the other portions out of a comparatively lightweight material, thereby maximizing the reduction in weight.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side elevational view of a bicycle provided with a bicycle crank set in accordance with a preferred embodiment of the present invention;
Figure 2 is an enlarged, side elevational view of the bicycle crank set of the bicycle illustrated in Figure 1;
Figure 3 is a partial, cross sectional view of the bicycle crank set illustrated in Figure 2, as seen along section line III-III of Figure 2;
Figure 4 is a complete cross sectional view of one of the crank arms of the crank set illustrated in Figure 3, with the inner mounting portion diagrammatically illustrated for the sake of convenience and simplicity; and
Figure 5 is a cross sectional view of the crank arm illustrated in Figure 4, as seen along section line V-V of Figure 4.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration.

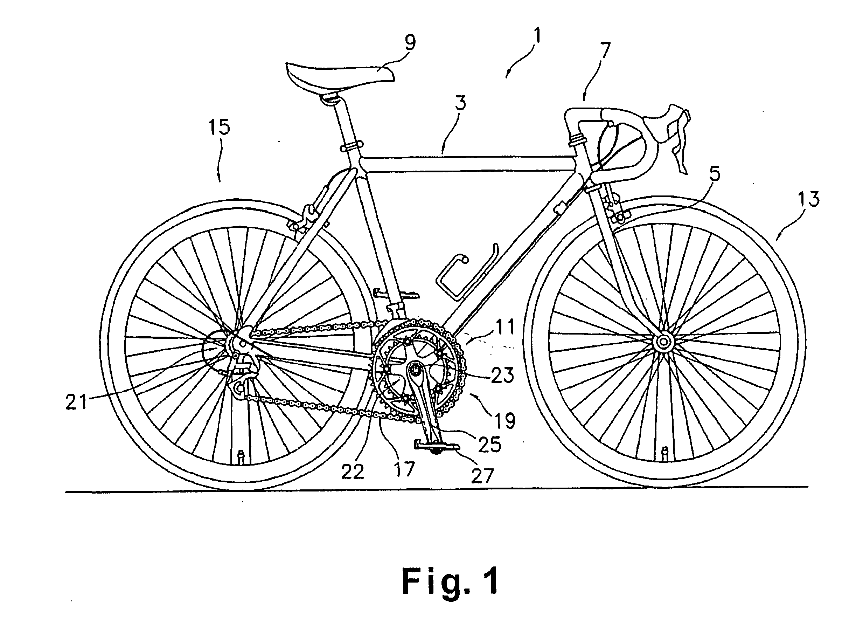

Referring initially to Figure 1, a bicycle 1 is illustrated with a crank set in accordance with a preferred embodiment of the present invention. The bicycle 1 is has a frame 3 with a front fork 5 freely rotatably mounted thereto, a drive train (drive unit) 11 arranged along a lower portion of the frame 3, a handlebar 7, a saddle (seat) 9, a front wheel 13, and a rear wheel 15. The drive train 11 is provided with a large-diameter gear set 19 (i.e., a front sprocket assembly), a small-diameter gear set 21 (i.e., a rear sprocket assembly), a chain 17, and a crank set freely rotatably supported in a bottom bracket (i.e., at a bottom end portion) 22 of the frame 3.

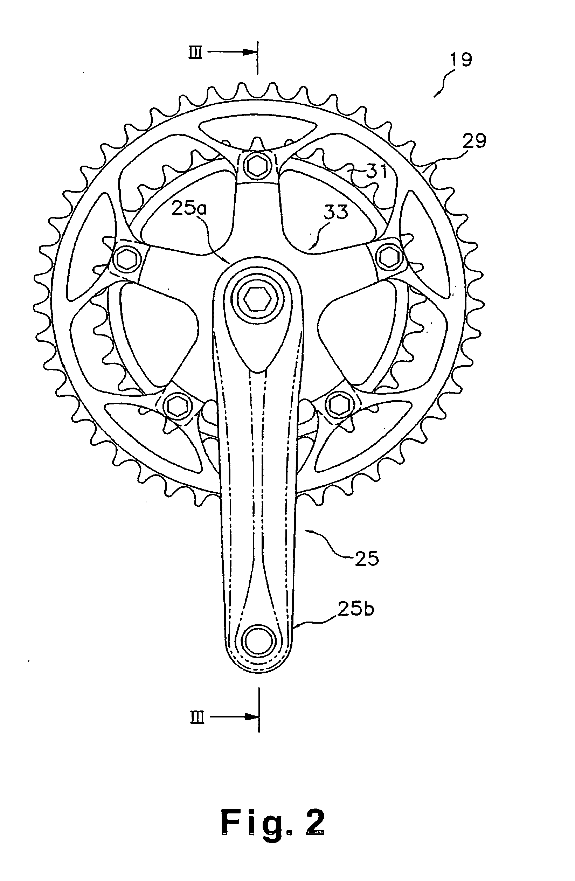

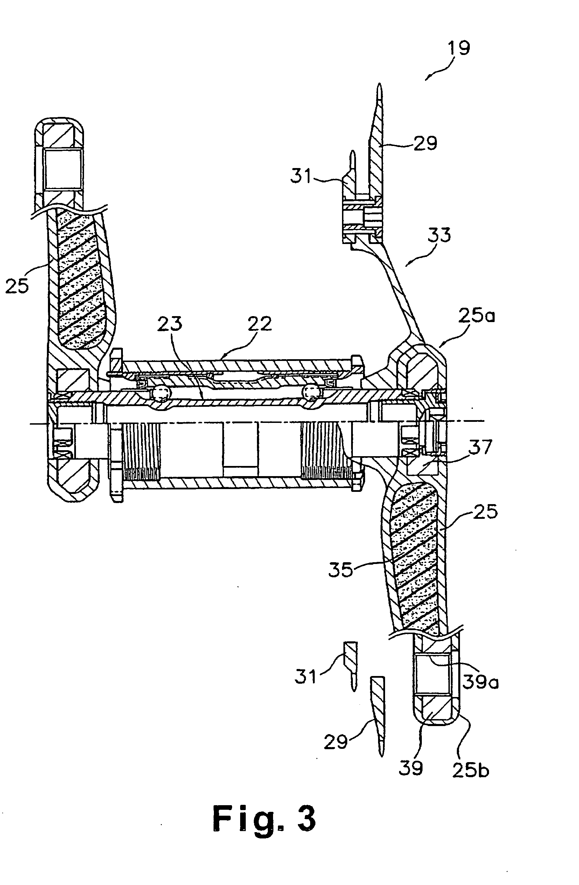

The crank set basically includes a crank shaft 23 and a pair of crank arms 25. The crank shaft 23 is supported in a freely rotatable manner at the bottom end portion 22 (see Figure 3) of the frame 3. The (two) crank arms 25 are mounted to opposite ends of the crank shaft 23 to rotate therewith. The front sprocket assembly 19 is preferably non-movably mounted to the right hand side crank arm 25 as seen in Figures 2 and 3. A pedal 27 is mounted in a freely rotatable manner to each crank arm 25. The pedals 27 are used by the rider to rotatate the crank arms 25, the front sprocket assembly 19, the chain 17, and thus, to selectively rotate the rear sprocket assembly 21 to propel the bicycle in a relatively conventional manner.

As shown in Figure 2 and 3, the front sprocket assembly (large-diameter gear set) 19 has two sprockets 29 and 31 of different diameters and a support member 33 that supports the sprockets 29 and 31 at radially inward portions of the sprockets 29 and 31. The support member 33 is a star shaped (e.g. five pointed) member with mounting flanges extending radially outwardly from a connecting portion that is non-rotatably coupled with both the right crank arm 25 and the crank shaft 23 to rotate therewith in a relatively conventional manner.

Referring mainly to Figures 2-5, the crank arms 25 will now be discussed in more detail. The two crank arms 25 are rod-like members mounted to opposite ends of the crank shaft 23. Each crank arm 25 extends in one radial direction that is opposite to the other crank arm 25. Each crank arm 25 includes an inner end portion 25a (i.e., a first end portion or part), an outer end portion 25b (i.e., a second end portion or part) and an elongated central portion extending between the inner and outer end portions 25a and 25b.

The inner end portions 25a are mounted to opposite ends of the crank shaft 23 to rotate therewith. The outer end portion 25b of each crank arm 25 has a pedal 27 mounted thereto on the outer side (i.e., the side facing forward in Figure 2) thereof that is opposite the side that is mounted to the crank shaft 23, i.e., mounted thereto in such a manner that the pedal 27 projects outwardly relative to a longitudinal center plane (not shown) of the bicycle 1. Each crank arm 25 has an inside surface that faces the center longitudinal plane (not shown) of the bicycle 1 and an outside surface that faces away from the center plane. The crank shaft 23 extends between the inside surfaces of the crank arms 25, while the pedals 27 extend outwardly in opposite directions (i.e., away from the center plane) from the outside surfaces of the crank arms 25, as best understood from Figures 1 and 3.

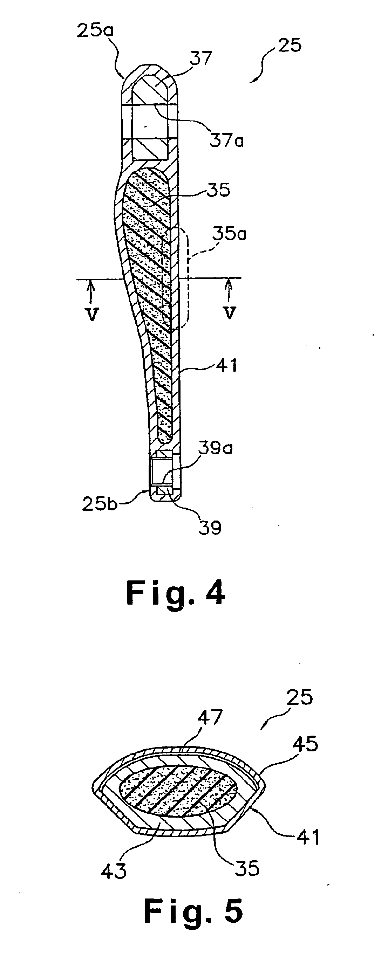

The crank arms (i.e., left and right sides) 25 are identical to each other except for the manner in which the pedals are coupled thereto (i.e. with opposite thread configurations), and the manner in which the crank shaft 23 is coupled thereto. However, these features are not critical to the present invention. Accordingly, these features will not be discussed and/or illustrated in detail herein, except as related to the present invention. As shown in Figure 4, each of the crank arms 25 basically includes a core material 35, an inner mounting member 37, an outer mounting member 39, and an outer material 41. The core material 35 preferably includes a foaming resin. More specifically, the core material 35 is preferably constructed entirely of a foaming resin, e.g., polyurethane foam. The core material 35 is arranged and configured such that it extends longitudinally within the crank arm 25 in an area between the two (inner and outer) mounting members 37 and 39.

Each mounting member 37, which is arranged at the inner end portion 25a (i.e., the crank shaft attachment portion) of each crank arm 25, has an insertion hole 37a into which an end part of the crank shaft 23 can be inserted. On the other hand, each mounting member 39, which is arranged at the outer end portion 25b (i.e., the pedal attachment portion) of each crank arm 25, has an insertion hole 39a into which the pedal shaft (not shown) of the pedal 27 can be inserted. The mounting members 37 and 39 are preferably constructed of a lightweight metallic material such as an aluminum alloy. The insertion holes 39a are preferably threaded holes for threadedly receiving the pedal shafts of the pedals 27. The mounting holes 37a preferably have a configuration based on the type of crank shaft 23 utilized therewith. Thus, the mounting holes 37a are only diagrammatically illustrated in some Figures.

As shown in Figure 5, the outer material 41 basically includes an inner (first) layer 43, an outer or surface (second) layer 45, and a marking layer 47 arranged between the inner and outer layers 43 and 45. In Figure 5, the top side of the crank arm 25 is the outside on which the pedal 27 is mounted and the bottom side is the side on which the crank shaft 23 is mounted. In other words, the upper portion of the crank arm 25 illustrated in Figure 5 corresponds to the right side portion of the crank arm 25 illustrated in Figure 4.

The inner layer 43 is formed in such a manner as to completely cover the outsides (exterior) of the core material 35 and the mounting members 37 and 39 (i.e., the exterior of the mounting members 37 and 39). The mounting holes 37a and 39a are preferably absent any additional covering or material (i.e., the inner layer 43, the surface layer 45 and the marking layer 47). More specifically, the inner layer 43 is made by sequentially wrapping a plurality of carbon fiber sheets around the core material 35 and the mounting members 37 and 39 and applying pressure thereto with a prescribed die having the desired final shape for the crank arm as shown herein. Applying carbon sheets with pressure and dies is well known in the art, and thus, will not be discussed and/or illustrated in detail herein. It is preferable for the carbon fiber sheets to be unidirectional carbon fiber sheets in which the fibers are generally oriented in one direction because the strength of such carbon fiber sheets is excellent. It is also preferable to wrap between about 12 and about 15 of these carbon fiber sheets in a laminated manner.

The surface layer 45 is preferably formed such that it completely covers the inner layer 43. However, at the portion of the crank arm 25 where the marking layer 47 is arranged, the surface layer 45 is formed in such a manner that the marking layer 47 is sandwiched between the inner layer 43 and the surface layer 45. More specifically, the surface layer 45 is preferably constructed using a single (multidirectional) carbon fiber cloth (made of carbon fibers woven in the manner of a woven fabric). Such an arrangement is provided to achieve an aesthetically appealing design or visual appearance as well as to indicate the appropriate amount of wear of the crank arms 25, as explained below in more detail. The carbon cloth (i.e., the surface layer 45) is wrapped around the outside of the inner layer 43 and the marking layer 47 and pressed with a prescribed die having the desired final shape for the crank arm as shown herein.. Applying carbon sheets with pressure and dies is well known in the art, and thus, will not be discussed and/or illustrated in detail herein. Optionally, the surface layer 45 can be treated/coated with a clear coating or the like.

The marking layer 47 is arranged between the inner layer 43 and the surface layer 45 and configured to become exposed when the surface layer 45 on the pedal 27 side of the crank arm 25 is lost due to wear or the like. In other words, the surface layer 45 is configured to expose the marking layer 47 after a predetermined amount of wear, and thus, weakening of the crank arm 25. The marking layer 47 is arranged at least at a lengthwise-middle area 35a (i.e., the region encircled with a broken line in Figure 4) of the center portion of the crank arm 25 on the outside of the crank arm 25 where the pedal 27 is mounted. However, optionally, the marking layer 47 can be arranged along the entire outside of each of the crank arms 25 (e.g., completely along the right hand side of Figure 4) between the inner layer 43 and the surface layer 45. Moreover, optionally, the marking layer 47 can be arranged to completely cover the inner layer 43, and then be completely covered by the surface layer 45. In any case, the marking layer 47 is preferably made of a woven synthetic polymer fabric made of aramid fibers. More specifically, aramid fiber cloth such as that sold under the trademark Kevlar™ (made of para-aramid fibers woven in the manner of a woven fabric) is preferably utilized for the marking layer 47. In any case, it is preferable for the marking layer 47 to be of a different color than the surface layer 45 (e.g., yellow in the case of Kevlar™) that can be clearly distinguished from the surface layer 45 when observed visually after the surface layer 45 has worn away. Applying/attaching aramid fiber sheets such as Kevlar™ sheets to other elements/materials is well known in the aramid fiber/fabric and materials arts, and thus, will not be discussed and/or illustrated in detail herein.

With a crank arm 25 configured as explained and illustrated herein, the marking layer 47 becomes exposed as the surface layer 45 is worn due to repeated contact with the inside face portion of the rider's shoe. The rider can easily notice that the crank arm 25 is worn by seeing the marking layer 47. Therefore, the crank arm 25 can be prevented from undergoing a decline in strength and suffering a future breakage failure due to wear being ignored.

Additionally, with this crank arm 25, the rider can notice wear even more reliably and the material cost can be reduced because the marking layer 47 is arranged in a portion that is frequently contacted by the rider's shoe.

### OTHER EMBODIMENTS

(a) The position in which the marking layer is arranged is not limited to the portion described in the previous embodiment. It is also acceptable to provide the marking layer over the entire outside of the crank arm where the pedal is mounted and/or throughout the entire region between the inner layer and the surface layer.
(b) The materials and the number of sheets used to make the inner layer, surface layer, and marking layer are not limited to those described previously.
(c) It is acceptable to configure the surface layer and the marking layer such that they can be distinguished not only by the sense of sight but also by the sense of touch.

### INDUSTRIAL APPLICABLITY

With the present invention, the marking layer becomes exposed as the second (surface) layer of the outer material is worn due to repeated contact with the side face portion of the rider's shoe. As a result, the rider or other observer can notice the wear by seeing the marking layer.

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

This application claims priority to Japanese Patent Application No. 2003-281582.

While only selected embodiments have been chosen to illustrate the present invention, it will be apparent to those skilled in the art from this disclosure that various changes and modifications can be made herein without departing from the scope of the invention as defined in the appended claims.

## Claims

1. A bicycle crank arm (25) comprising:
a first end portion (25a) configured to be coupled to a bicycle crank shaft (23);
a second end portion (25b) configured to have a pedal (27) rotatably coupled thereto; and
a center portion extending between the first and second end portions (25a, 25b),
the bicycle crank arm (25) including a core material (35) arranged in an area between the first and second end portions (25a, 25b), and an outer material (41) covering the core material (35), wherein the outer material having a first layer (43) formed such that it covers the core material (35), and a second layer (45) formed such that it covers the first layer (43),
**characterized in that** the outer material (41) further has a marking layer (47) arranged between the first and second layers (43, 45).

2. The bicycle crank arm (25) as recited in claim 1, wherein
the first end portion (25a), the second end portion (25b) and the center portion define an inside surface configured to have the crank shaft (23) extending inwardly therefrom and an outside surface configured to have the pedal extending outwardly therefrom, and
the marking layer (47) is arranged within the outside surface.

3. The bicycle crank arm (25) as recited in claim 1 or 2, wherein
the marking layer (47) is arranged at least in a lengthwise-middle area 35a of the center portion of the crank arm (25) between the first end portion (25a) and the second end portion (25b).

4. The bicycle crank arm (25) as recited in any of the preceding claims, wherein the marking layer (47) has a different color than the second layer (45).

5. The bicycle crank arm (25) as recited in any of the preceding claims, wherein each of the first and second layers (43, 45) includes a carbon material.

6. The bicycle crank arm (25) as recited in any of the preceding claims, wherein the core material (35) is formed of a foaming resin.

7. The bicycle crank arm (25) as recited in any of the preceding claims, wherein the second layer (45) is a single layer constructed of carbon cloth.

8. The bicycle crank arm (25) as recited in any of the preceding claims, wherein
the first end portion (25a) includes a first mounting member configured to have the crank shaft (23) coupled thereto and the second end portion (25b) includes a second mounting portion configured to have the pedal (27) coupled thereto, and
the first and second layers (43, 45) are formed on the exterior of the first and second mounting members.

9. The bicycle crank arm (25) as recited in claim 8, wherein
the first and second mounting members are constructed of a metallic material.

10. The bicycle crank arm (25) as recited in claim 8 or 9, wherein
the first layer includes a plurality of unidirectional carbon fiber sheets.

11. The crank arm (25) as recited in any of claims 8 to 10, wherein
the marking layer is constructed of an aramid fiber cloth.

## Patentansprüche

1. Fahrradkurbelarm (25), aufweisend:
einen ersten Endabschnitt (25a), der konfiguriert ist, um mit einer Fahrradkurbelachse (23) verbunden zu werden;
einen zweiten Endabschnitt (25b), der konfiguriert ist, um ein Pedal (27) mit diesem drehbar zu verbinden; und
einen mittleren Abschnitt, der sich zwischen den ersten und zweiten Endabschnitten (25a, 25b) erstreckt, wobei der Fahrradkurbelarm (25) ein Kernmaterial (35), das in einem Gebiet zwischen den ersten und zweiten Endabschnitten (25a, 25b) angeordnet ist, und ein äußeres Material (41) beinhaltet, welches das Kernmaterial (35) umhüllt, wobei das äußere Material eine erste Schicht (43) aufweist, die derart ausgebildet ist, dass sie das Kernmaterial (35) umhüllt, und
eine zweite Schicht (45) aufweist, die derart ausgebildet ist, dass sie die erste Schicht (43) umhüllt,
**dadurch gekennzeichnet, dass** das äußere Material (41) weiter eine Markierungsschicht (47) aufweist, die zwischen den ersten und zweiten Schichten (43, 45) angeordnet ist.

2. Fahrradkurbelarm (25) nach Anspruch 1, bei dem
der erste Endabschnitt (25a), der zweite Endabschnitt (25b) und der mittlere Abschnitt eine Innenseitenfläche, die so konfiguriert ist, dass sich die Kurbelachse (23) von dieser nach innen erstreckt, und eine Außenseitenfläche definieren, die so konfiguriert ist, dass sich das Pedal von dieser nach außen erstreckt, und
die Markierungsschicht (47) in der Außenseitenfläche angeordnet ist.

3. Fahrradkurbelarm (25) nach Anspruch 1 oder 2, bei dem
die Markierungsschicht (47) zumindest in einer in Längsrichtung gesehen in der Mitte befindlichen Zone (35a) des mittleren Abschnitts des Kurbelarms (25) zwischen dem ersten Endabschnitt (25a) und dem zweiten Endabschnitt (25b) angeordnet ist.

4. Fahrradkurbelarm (25) nach einem der vorhergehenden Ansprüche, bei dem
die Markierungsschicht (47) eine unterschiedliche Farbe als die zweite Schicht (45) aufweist.

5. Fahrradkurbelarm (25) nach einem der vorhergehenden Ansprüche, bei dem
jede von den ersten und zweiten Schichten (43, 45) ein Kohlenstoffmaterial beinhaltet.

6. Fahrradkurbelarm (25) nach einem der vorhergehenden Ansprüche, bei dem
das Kernmaterial (35) aus einem Schaumharz ausgebildet ist.

7. Fahrradkurbelarm (25) nach einem der vorhergehenden Ansprüche, bei dem
die zweite Schicht (45) eine einzelne Schicht ist, die aus einem Kohlenstoff-Textilmaterial aufgebaut ist.

8. Fahrradkurbelarm (25) nach einem der vorhergehenden Ansprüche, bei dem
der erste Endabschnitt (25a) ein erstes Befestigungselement beinhaltet, das konfiguriert ist, um die Kurbelachse (23) mit diesem zu verbinden, und der zweite Endabschnitt (25b) einen zweiten Befestigungsabschnitt beinhaltet, der konfiguriert ist, um das Pedal (27) mit diesem zu verbinden, und
die ersten und zweiten Schichten (43, 45) an dem Äußeren der ersten und zweiten Befestigungselemente ausgebildet sind.

9. Fahrradkurbelarm (25) nach Anspruch 8, bei dem
die ersten und zweiten Befestigungselemente aus einem Metallmaterial aufgebaut sind.

10. Fahrradkurbelarm (25) nach Anspruch 8 oder 9, bei dem
die erste Schicht eine Mehrzahl von unidirektionalen Kohlefaserlagen beinhaltet.

11. Kurbelarm (25) nach einem der Ansprüche 8 bis 10, bei dem
die Markierungsschicht aus einem Aramidfaser-Textilmaterial aufgebaut ist.

## Revendications

1. Bras de manivelle de bicyclette (25) comprenant :
une première portion d'extrémité (25a) configurée pour être couplée à un vilebrequin de bicyclette (23) ;
une deuxième portion d'extrémité (25b) configurée de sorte qu'une pédale (27) lui soit couplée de manière rotative ; et
une portion centrale s'étendant entre les première et deuxième portions d'extrémité (25a, 25b), le bras de manivelle de bicyclette (25) comprenant un matériau de noyau (35) disposé dans une région entre les première et deuxième portions d'extrémité (25a, 25b), et un matériau extérieur (41) couvrant le matériau de noyau (35), le matériau extérieur ayant une première couche (43) formée de telle manière qu'elle couvre le matériau de noyau (35), et une deuxième couche (45) formée de telle manière qu'elle couvre la première couche (43),
**caractérisé en ce que** le matériau extérieur (41) comprend en outre une couche de marquage (47) disposée entre les première et deuxième couches (43, 45).

2. Bras de manivelle de bicyclette (25) selon la revendication 1, dans lequel
la première portion d'extrémité (25a), la deuxième portion d'extrémité (25b) et la portion centrale définissent une surface intérieure configurée de manière que le vilebrequin (23) s'étende vers l'intérieur depuis cette surface et une surface extérieure configurée de manière que la pédale s'étende vers l'extérieur depuis cette surface, et
la couche de marquage (47) est disposée au sein de la surface extérieure.

3. Bras de manivelle de bicyclette (25) selon la revendication 1 ou 2, dans lequel
la couche de marquage (47) est disposée au moins dans une région centrale dans le sens longitudinal (35a) de la portion centrale du bras de manivelle (25) entre la première portion d'extrémité (25a) et la deuxième portion d'extrémité (25b).

4. Bras de manivelle de bicyclette (25) selon l'une quelconque des revendications précédentes, dans lequel
la couche de marquage (47) a une couleur différente de celle de la deuxième couche (45).

5. Bras de manivelle de bicyclette (25) selon l'une quelconque des revendications précédentes, dans lequel
chacune des première et deuxième couches (43, 45) comprend un matériau en carbone.

6. Bras de manivelle de bicyclette (25) selon l'une quelconque des revendications précédentes, dans lequel
le matériau de noyau (35) est formé d'une résine expansible.

7. Bras de manivelle de bicyclette (25) selon l'une quelconque des revendications précédentes, dans lequel
la deuxième couche (45) est une couche unique constituée d'une toile de carbone.

8. Bras de manivelle de bicyclette (25) selon l'une quelconque des revendications précédentes, dans lequel
la première portion d'extrémité (25a) comprend un premier élément de montage configuré de sorte que le vilebrequin (23) lui soit couplé et la deuxième portion d'extrémité (25b) comprend une deuxième portion de montage configurée de sorte que la pédale (27) lui soit couplée, et
les première et deuxième couches (43, 45) sont formées à l'extérieur des premier et deuxième éléments de montage.

9. Bras de manivelle de bicyclette (25) selon la revendication 8, dans lequel
les premier et deuxième éléments de montage sont constitués d'un matériau métallique.

10. Bras de manivelle de bicyclette (25) selon la revendication 8 ou 9, dans lequel
la première couche comprend une pluralité de feuilles de fibres de carbone unidirectionnelles.

11. Bras de manivelle de bicyclette (25) selon l'une quelconque des revendications 8 à 10, dans lequel
la couche de marquage est constituée d'une toile de fibres aramides.
